# EUROPÄISCHE PATENTSCHRIFT

(11) **EP 1 181 521 B1**
(45) Veröffentlichungstag und Bekanntmachung des Hinweises auf die Patenterteilung: **09.02.2005**
(21) Anmeldenummer: 00940165.4
(22) Anmeldetag: 10.05.2000
(51) Int. Cl.: G01M 15/00, G05B 19/10, G05B 19/042

(54) **DIAGNOSETESTVORRICHTUNG FÜR KRAFTFAHRZEUGE MIT PROGRAMMIERBAREN STEUERGERÄTEN**
DIAGNOSTIC TEST DEVICE FOR MOTOR VEHICLES WITH PROGRAMMABLE CONTROL DEVICES
DISPOSITIF DE CONTROLE PAR DIAGNOSTIC POUR VEHICULES A MOTEUR, DOTE D'APPAREILS DE COMMANDE PROGRAMMABLES

(30) Priorität: 11.05.1999 DE 19921845
(43) Veröffentlichungstag der Anmeldung: 27.02.2002
(73) Patentinhaber: ROBERT BOSCH GMBH, 70442 Stuttgart (DE)
(72) Erfinder: FRECH, Eberhard, D-73230 Kirchheim (DE); WAGNER, Wolfgang, D-70825 Korntal-Muenchingen (DE)
(86) Internationale Anmeldenummer: PCT/DE2000/001445
(87) Internationale Veröffentlichungsnummer: WO 2000/068659

(56) Entgegenhaltungen:
- FR-A- 2 719 919
- US-A- 5 036 479
- US-A- 5 278 759
- US-A- 5 365 436

## Beschreibung

### Stand der Technik

Die Erfindung geht aus von einer Diagnosetestvorrichtung für Kraftfahrzeuge mit programmierbaren Steuergeräten, der im Oberbegriff des Anspruchs 1 definierten Gattung.

Diagnosetestvorrichtungen für Kraftfahrzeuge, die programmierbare Steuergeräte enthalten, sind allgemein bekannt. Solche programmierbaren Steuergeräte können Eigendiagnosemittel enthalten und steuern, überwachen programmgesteuert die Motorsteuerung und andere Systeme des Kraftfahrzeugs. In Eigendiagnose werden Fehlercodes generiert und diese abgespeichert. Über einen Kraftfahrzeug-seitigen Diagnose-/Prüfstecker sind diese Steuergeräte und die Fehlercodespeicher mit einem externen Diagnosetester verbindbar.

So ist beispielsweise in einem Artikel von D.Nemec "Möglichkeiten komfortabler Testgeräte zur Auswertung der Eigendiagnose von Steuergeräten im Kraftfahrzeug" in VDI Berichte Nr. 687, 1988, Seite 365-385, ausführlich die Zusammenarbeit zwischen Kraftfahrzeug-seitigen Steuergeräten mit Eigendiagnose und dem externen Diagnosetestgerät dargelegt. Dabei ist unter anderem auch davon die Rede, siehe beispielsweise Seite 384, daß ganze Steuergeräte-Programme bei der Varianten-Programmierung über die Schnittstelle des Diagnose-/Prüfsteckers in das unprogrammierte Steuergerät geladen werden können. Dies sei insbesondere kurz vor Serienlauf wesentlich, da noch Parameter vom Hersteller geändert werden könne. Außerdem sei die Ersatzteilhaltung einfacher, da es genügt, unprogrammierte Steuergeräte zu lagern, die dann von Fall zu Fall programmiert und eingebaut werden.

Der Systemumfang von in Kraftfahrzeugen vorgesehenen Motorsteuerungen ist durch die Anforderungen an Komfort, Sicherheit und Diagnose sehr umfangreich geworden. So hat beispielsweise ein Motronic-Motorsteuersystem ca. 4.000 Daten, die an die Anforderungen des jeweiligen Fahrzeugs anzupassen sind. Durch allgemein knappe Terminrahmen für den Serienlauf von Motorsteuerungen sind Daten oder Programmänderungen während der laufenden Serie nicht auszuschließen. Motorsteuerungen mit Eigendiagnose sind heute überwiegend mit programmierbaren Flash-Speichern ausgerüstet. Für eine Umprogrammierung zur Korrektur von Daten oder Funktionen müssen die Steuergeräte ausgetauscht oder an Programmiergeräte angeschlossen werden. Im Fall von Fehlern an den Serienprogrammen entstehen trotz der Möglichkeit der Umprogrammierung hohe Kosten durch zusätzlichen Aufwand für die Programmierung.

Aus der US 5 278 759 ist es bekannt, den nichtflüchtigen Speicher eines Kraftfahrzeugcomputers über eine serielle Schnittstelle umzuprogrammieren.

Aufgabe vorliegender Erfindung ist es, eine Möglichkeit anzugeben, bei der auf einfache Weise in den Streuergeräten die jeweils aktuelle Version kostengünstig einprogrammiert ist.

### Vorteile der Erfindung

Die erfindungsgemäße Diagnosetestvorrichtung mit den kennzeichnenden Merkmalen des Anspruchs 1 hat gegenüber dem Stand der Technik den Vorteil, daß bei der regelmäßigen Wartung des Kraftfahrzeugs in der Werkstatt automatisch bei Anschluß des externen, in der Werkstatt vorhandenen Diagnosetesters, die in den Steuergeräten vorhandenen Programme daraufhin überprüft werden, welche Version sie enthalten und daß gegebenenfalls durch den entsprechend ausgerüstetetn externen Diagnosetester eine Umprogrammierung der in den Steuergeräten vorhandenen Programme erfolgt, so daß dort immer die aktuellste Version vorhanden ist. Es entsteht durch die automatische Prozedur der Überprüfung und gegebenenfalls der Umprogrammierung für das Servicepersonal kein zusätzlicher Arbeitsaufwand. Der Diagnosetester ist während der Wartungsarbeiten, beispielsweise während des Ölwechsels, so lange angeschlossen zu lassen, bis der aktuelle Programmstand einprogrammiert ist. An den Steuergeräten selbst entstehen keine Mehrkosten, da dort bereits eine Schnittstelle zur Umprogrammierung bzw. zur Programmierung vorhanden ist. Somit erhält der Kunde im Rahmen der Wartungsarbeiten am Fahrzeug den jeweils aktuellen Programmstand. Dadurch können auch Garantiekosten für Umprogrammierungen im Feld vermieden werden. Außerdem kann durch die Umprogrammierung auf einfache Weise berücksichtigt werden, daß mit zunehmender Komplexität der Systeme im Auslieferungszustand nicht immer fehlerfreie Programme zur Verfügung stehen.

Gemäß der Erfindung wird dies prinzipiell dadurch erreicht, daß der externe Diagnosetester mit einer Programmerkennungs- und Programmladevorrichtung ausgestattet ist, wobei mittels der Programmerkennungsvorrichtung die im angeschlossenen Steuergerät enthaltene Programmversion abgefragt und erkannt wird, und daß dann, wenn das Kraftfahrzeug-seitig vorhandene und über den Diagnose-/Prüfstecker erkannte, im angeschlossenen Steuergerät des Kraftfahrzeugs vorhandene Programm nicht in der neuesten und aktuellsten Version abgespeichert ist, von der Programmladevorrichtung des Diagnosetesters die jeweils aktuellste Version in den Programmspeicher des betreffenden Steuergerätes des Kraftfahrzeuges geladen wird.

Dabei ist vorgesehen, daß der externe Diagnosetester mit einer zentralen Datenbank selbsttätig in Kommunikation tritt, um die Programmversion zu überprüfen und, wenn notwendig, die aktuelle Programmversion zu erhalten, die für das am Diagnosetester angeschlossene Steuergerät gilt und sie dort einzuspeichern. Dadurch werden keine großen Anforderungen an den Speicher des Diagnosetesters gestellt im Vergleich zu einem Diagnosetester, der mit den jeweils neuesten Versionen der notwendigen Programme ausgestattet ist.

Durch die in den abhängigen Ansprüchen jeweils niedergelegten Maßnahmen sind vorteilhafte Weiterbildungen und Verbesserungen der im Anspruch I angegebenen Diagnosetestvorrichtung möglich.

Entsprechend einer vorteilhaften und zweckmäßigen Weiterbildung der erfindungsgemäßen Vorrichtung werden neben dem Programm für die Kraftfahrzeug-seitigen Steuergeräte mit Eigendiagnosemittel, insbesondere dem Programm für die Motorsteuerung, auch Programme von Steuergeräten anderer Systeme und Subsysteme, die im Kraftfahrzeug vorgesehen sind, überprüft und gegebenenfalls neu geladen bzw. umprogrammiert. Damit ist eine sehr flexible Möglichkeit gegeben, um die verschiedenen Steuerungs- und Diagnoseprogramme, die in verschiedenen Steuergeräten eines Kraftfahrzeuges vorhanden sind, auf dem jeweils aktuellsten Stand zu halten.

In sehr zweckmäßiger und vorteilhafter Ausgestaltung und Weiterbildung der erfindungsgemäßen Diagnosetestvorrichtung wird durch den externen Diagnosetester die Programmversionsüberprüfung und gegebenenfalls die erforderliche Umprogrammierung selbsttätig durchgeführt. Dadurch wird vom Wartungs- und Servicepersonal keine besondere Aufmerksamkeit abverlangt, um diesen Punkt bei Wartungs- und Servicearbeiten vorzunehmen.

In weiterer vorteilhafter Ausgestaltung dieser Version der erfindungsgemäßen Diagnosetestvorrichtung erfolgt die Kommunikation zwischen dem externen Diagnosetester und der zentralen Datenbank über Standleitung oder drahtlos über mobile Telekommunikation von der Werkstatt oder dem Kraftfahrzeug selbst aus.

Die Erfindung wird anschließend anhand eines Ausführungsbeispieles näher erläutert.

### Beschreibung der Ausführungsbeispiele

Das externe Diagnosetestgerät, welches in einer Service- oder Reparaturwerkstatt vorhanden ist, wird erfindungsgemäß mit einer Programmerkennungs- und Programmladevorrichutng ausgestattet. Wenn somit beim Service des Fahrzeugs über den Diagnose-/Prüfstecker die Fehlerspeicher der verschiedenen Steuergeräte ausgelesen werden, wird selbsttätig vom externen Diagnosetester mittels der Programmerkennungsvorrichtung gleichzeitig und vorzugsweise selbsttätig überprüft, welche Programmversion und welcher Datenstand im gerade angeschlossenen Steuergerät vorhanden ist. Vom Diagnosetester wird dann gleichzeitig verglichen, ob der ermittelte Programm- und Datenstand mit dem aktuellsten Stand übereinstimmt. Ist dies nicht der Fall, dann wird von einer Programmladevorrichtung, mit welcher der externe Diagnosetester ebenfalls ausgestattet ist, die aktuellste Version auf den Programmspeicher des entsprechenden Steuergerätes geladen. Somit wird neuer Programm- und Datenstand in die entsprechenden Speicherbereiche der angeschlossenen Steuergeräte eingeschrieben. Das Steuergerät wird so entsprechend neu programmiert oder umprogrammiert. Die Steuergeräte, die heute verwendet werden, sind mit einem Flash-Speicher ausgerüstet, der über das serielle Kommunikationsprotokoll über den Diagnose-/Prüfstecker programmiert werden kann.

Der Werkstatt-seitige externe Diagnosetester übernimmt somit neben den normalen Diagnosearbeiten auch die Überprüfung der vorhandenen Programmversionen und gegebenenfalls die Aktualisierung der Programme in den Steuergeräten. Die gegebenenfalls für die Umprogrammierung notwendige Zeit kann vom Diagnosetester dann aufgebracht werden, wenn beispielsweise der Ölwechsel am Fahrzeug durchgeführt wird. Man läßt dazu eben den externen Diagnosetester länger am Fahrzeug angeschlossen.

Der neueste Programmstand für die einzelnen Steuergeräte, die in verschiedenen Kraftfahrzeugen verwendet werden, kann entsprechend einer Ausführungsgestaltung der Erfindung im externen Diagnosetester selbst enthalten sein. Dazu können beispielsweise CD-Roms oder ähnliche umfangreiche Datenträger zur Aktualisierung der Rechner in den Serviceeinrichtungen regelmäßig die aktuellen Programm- und Datenstände übermitteln.

Es ist jedoch auch möglich, und im allgemeinen wohl wesentlich zweckmäßiger, in einer zentralen Datenbank alle aktuellen Programm- und Datenstände für die in den Fahrzeugen verwendeten Steuergeräte abzuspeichern. Überprüft der Diagnosetester in der Werkstatt ein Fahrzeug, dann wird er automatisch durch seine Einrichtungen eine Verbindung zur zentralen Datenbank herstellen, um zum einen die Überprüfung auf die neueste Programmversion durchzuführen und zum andern, wenn es gegebenenfalls notwendig sein soll, den neuesten Programmstand von der zentralen Stelle übermittelt zu bekommen, damit er über seine Programmladevorrichtung diese neueste Version in den entsprechenden Speicherbereich des angeschlossenen Steuergeräts einspeichert.

Die Verbindung zwischen dem Diagnosetester in der Werkstatt und der zentralen Stelle kann entweder über eine Standleitung oder über ein Schnurlostelefon zum Telefonanschluß der Werkstatt erfolgen oder auch über drahtlose mobile Telekommunikation von der Werkstatt oder gar dem Kraftfahrzeug selbst zur zentralen Datenbank. Es können gegebenenfalls auch im Fahrzeug selbst bereits vorhandene Kommunikationseinrichtungen zu diesem Zweck verwendet werden. Vorteilhafterweise ist aus Sicherheitsgründen der externe Datentester mit einer entsprechenden besonderen Berechtigung zur Überprüfung und Umprogrammierung ausgestattet.

Die Erfindung gestattet in vorteilhafter Weise die Aktualisierung der in Steuergeräten vorhandenen Programme, ohne daß dazu ein erheblicher Mehraufwand notwendig ist. Dem Kraftfahrer steht somit in seinem Kraftfahrzeug immer der aktuellste Programmund Datenstand in den entsprechenden Steuergeräten zur Verfügung.

Es kann auch vorgesehen sein, daß zur Erhöhung der Sicherheit der externe Diagnosetester mit einer besonderen Berechtigung zur Überprüfung der aktuell im angeschlossenen Steuergerät des Kraftfahrzeuges vorhandenen Programmversion und, wenn notwendig, zur Umprogrammierung des entsprechenden Programmes ausgestattet ist.

## Patentansprüche

1. Externer Diagnosetester für Kraftfahrzeuge, wobei im Kraftfahrzeug programmierbare Steuergeräte mit Eigendiagnosemittel vorgesehen sind, welche programmgesteuert die Motorsteuerung und andere Systeme des Kraftfahrzeugs steuern, überwachen, Fehlercodes generieren und diese abspeichern und welche über einen kraftfahrzeugseitigen Diagnose-/Prüfstecker mit dem externen Diagnosetester verbindbar sind, **dadurch gekennzeichnet, daß** der externe Diagnosetester mit einer Programmerkennungs- und Programmladevorrichtung ausgestattet ist, wobei mittels der Programmerkennungsvorrichtung die im angeschlossenen Steuergerät enthaltene Programmversion abgefragt und erkannt wird, und daß dann, wenn das über den Diagnose-/Prüfstecker erkannte, im angeschlossenen Steuergerät des Kraftfahrzeugs vorhandene Programm nicht in der neuesten und aktuellsten Version abgespeichert ist, von der Programmladevorrichtung des Diagnosetesters die jeweils aktuellste Version in den Programmspeicher des betreffenden Steuergeräts des Kraftfahrzeugs geladen wird, wobei Mittel vorgesehen sind um mit einer zentralen Datenbank selbsttätig in Kommunikation zu treten, um die Programmversion zu überprüfen und, wenn notwendig, die aktuelle Programmversion zu erhalten, die für das am Diagnosetester angeschlossene Steuergerät gilt, und sie dort einzuspeichern.

2. Externer Diagnosetester nach Anspruch 1, **dadurch gekennzeichnet, daß** er eingerichtet ist, neben dem Programm für die kraftfahrzeugseitigen Steuergeräte mit Eigendiagnosemittel, insbesondere dem Programm für die Motorsteuerung, auch Programme von Steuergeräten anderer Systeme und Subsysteme, die im Kraftfahrzeug vorgesehen sind, zu überprüfen, gegebenenfalls neu zu laden bzw. umzuprogrammieren.

3. Externer Diagnosetester nach Anspruch 1 oder 2, **dadurch gekennzeichnet, daß** er eingerichtet ist zur selbsttätigen Durchführung der Programmversionsüberprüfung und der gegebenenfalls erforderlichen Umprogrammierung.

4. Externer Diagnosetester nach einem der vorhergehenden Ansprüche, **dadurch gekennzeichnet, daß** er eingerichtet ist, die Kommunikation über Standleitung oder drahtlos über mobile Telekommunikation von der Werkstatt oder dem Kraftfahrzeug selbst durchzuführen.

## Claims

1. External diagnostic tester for motor vehicles, control devices with self-diagnostic means which can be programmed in the motor vehicle being provided, which self-diagnostic means are program-controlled and control and monitor the engine controller and other systems of the motor vehicle, generate fault codes and store them and can be connected to the external diagnostic tester via a diagnostic/test plug at the motor vehicle end, **characterized in that** the external diagnostic tester is equipped with a program detecting and program loading device, the version of the program which is contained in the connected control device being interrogated and detected by means of the program detecting device, and **in that**, if the program which is detected by means of the diagnostic/test plug and is present in the connected control device of the motor vehicle is not stored in the latest and most up-to-date version, the respectively latest version is loaded into the program memory of the respective control device of the motor vehicle by the program loading device of the diagnostic tester, means being provided for automatically entering into communication with a central database in order to check the version of the program and, if necessary, to obtain the current version of the program which is applicable for the control device which is connected to the diagnostic tester, and to store it there.

2. External diagnostic tester according to Claim 1, **characterized in that** it is designed for checking both the program for the motor-vehicle-end control devices with self-diagnostic means, in particular the program for the engine controller, and programs of control devices of other systems and subsystems which are provided in the motor vehicle, if appropriate for reloading and reprogramming them.

3. External diagnostic tester according to Claim 1 or 2, **characterized in that** it is designed for automatically carrying out the checking of the version of the program and the reprogramming which may be necessary.

4. External diagnostic tester according to one of the preceding claims, **characterized in that** it is designed to carry out the communication via a dedicated line or in a wire-free fashion via mobile telecommunication from the workshop or the motor vehicle itself.

## Revendications

1. Testeur externe de diagnostic pour véhicule automobile selon lequel le véhicule comporte des appareils de commande programmables avec des moyens de diagnostic propres, qui commandent par programme la commande de moteur et d'autres systèmes du véhicule automobile, surveillent et génèrent des codes d'erreurs et enregistrent ceux-ci et peuvent être reliés à un testeur de diagnostic externe par un connecteur de diagnostic et/ou de contrôle du véhicule,
**caractérisé en ce que**
le testeur externe de diagnostic est équipé d'un dispositif de reconnaissance et de chargement de programme, et
à l'aide du dispositif de reconnaissance de programme on interroge la version de programme contenue dans l'appareil de commande ainsi raccordé et on la reconnaît, et
si le programme reconnu par l'intermédiaire du connecteur de diagnostic/contrôle dans l'appareil raccordé du véhicule automobile ne correspond pas à la version la plus récente et actuelle, le dispositif de chargement de programme du testeur de diagnostic charge la version la plus actuelle dans la mémoire de programme de l'appareil de commande correspondante du véhicule automobile,
des moyens étant prévus pour assurer une communication automatique avec une banque centrale de données, pour vérifier la version du programme et si nécessaire obtenir la version la plus actuelle valable pour l'appareil de commande raccordé au testeur de diagnostic et enregistrer cette version.

2. Testeur externe de diagnostic selon la revendication 1,
**caractérisé en ce qu'**
il est conçu pour qu'à côté du programme pour les appareils de commande équipés de moyens de diagnostic propres dans le véhicule, notamment du programme de commande du moteur, on a également des programmes d'appareils de commande d'autres systèmes et tout système dans le véhicule, pour les vérifier et le cas échéant les recharger de nouveau ou les reprogrammer.

3. Testeur externe de diagnostic selon l'une quelconque des revendications 1 ou 2,
**caractérisé en ce qu'**
il est conçu pour effectuer automatiquement une vérification de la version du programme et assurer le cas échéant la reprogrammation nécessaire.

4. Testeur externe de diagnostic selon l'une quelconque des revendications précédentes,
**caractérisé en ce qu'**
il est prévu pour effectuer la communication par la ligne d'état ou de manière sans fil par télécommunication mobile à partir de l'atelier ou du véhicule et de manière automatique.
